# EUROPÄISCHE PATENTSCHRIFT

(11) **EP 4 350 942 B1**
(45) Veröffentlichungstag und Bekanntmachung des Hinweises auf die Patenterteilung: **25.03.2026**
(21) Anmeldenummer: 23020455.4
(22) Anmeldetag: 01.10.2023
(51) Int. Cl.: H02J 9/06

(54) **VORRICHTUNG UND VERFAHREN ZUR STROMVERSORGUNG VON GERÄTEN IN MEDIZINISCHEN EINRICHTUNGEN**
APPARATUS AND METHOD FOR POWERING DEVICES IN MEDICAL FACILITIES
APPAREIL ET PROCEDE D'ALIMENTATION D'APPAREILS DANS DES CENTRES MÉDICAUX

(30) Priorität: 01.10.2022 DE 102022125440
(43) Veröffentlichungstag der Anmeldung: 10.04.2024
(73) Patentinhaber: ESA Elektroschaltanlagen Grimma GmbH, 04668 Grimma (DE)
(72) Erfinder: Mehnert, Manuel, 04808 Wurzen (DE); Reinker, Wolfgang, 04651 Bad Lausick (DE)
(74) Vertreter: Dr. Völger, Wolfgang

(56) Entgegenhaltungen:
- ESA: "Medizinisch genutzte Bereiche Die komplette Stromversorgung f�r medizinisch genutzte Bereiche mit dem Steuerungs-und Kontrollsystem HospEC", 31 March 2017 (2017-03-31), pages 1 - 37, XP093133935, Retrieved from the Internet <URL:https://www.esa-grimma.de///wp-content/uploads/2017/03/HospEC_�bersicht_web_de-2.pdf> [retrieved on 20240222]
- BALAN GEORGE ET AL: "Critical Issues in the Design and Operation of Electrical Installations in Hospitals", 2021 INTERNATIONAL CONFERENCE ON ELECTROMECHANICAL AND ENERGY SYSTEMS (SIELMEN), IEEE, 6 October 2021 (2021-10-06), pages 503 - 510, XP034022635, DOI: 10.1109/SIELMEN53755.2021.9600413

## Beschreibung

Die vorliegende Erfindung betrifft eine Vorrichtung und ein Verfahren zur sicheren Stromversorgung von Geräten in medizinischen Einrichtungen der Anwendungsgruppe 2 nach DIN VDE 0100-710:2012-10, insbesondere für den Einsatz in Arztpraxen und medizinischen Versorgungszentren (MVZ), über zwei unabhängige Zuleitungen, bestehend aus einem Netzanschluss und einem Batteriesystem.

Immer öfter werden medizinische Eingriffe nicht mehr in Krankenhäusern, sondern auch in medizinischen Versorgungszentren (MVZ) oder Arztpraxen durchgeführt. Daraus ergeben sich für die Stromversorgung in allen medizinischen und technischen Einrichtungen gleiche und besondere Anforderungen und Vorschriften zum Schutz des Lebens und der Sicherheit der Patienten und der behandelnden Personen. Bei Störungen der allgemeinen Stromversorgung müssen die medizinisch-technischen Einrichtungen der Anwendungsgruppe 2, das sind OP-Räume und Intensivstationen, über eine Sicherheitsstromversorgung (SV) betrieben werden. Im Gegensatz zu anderen Gruppen darf die elektrische Anlage bei einem Erd- oder Körperschluss oder bei Ausfall der Stromversorgung nicht abgeschaltet werden. Insbesondere ist die DIN VDE 0100-710:2012-10 / IEC 60364-7-710:2021-05 zu beachten.

Zur Einhaltung dieser Anforderungen wären in Arztpraxen und medizinischen Versorgungszentren (MVZ) zur sicheren Stromversorgung zwei unabhängige Einspeiseleitungen erforderlich. Bei Störung auf einer Einspeiseleitung wird über eine Umschaltung automatisch auf die zweite Einspeiseleitung umgeschaltet. Für Arztpraxen ist der Einsatz einer zweiten Stromversorgung meist nicht möglich, deshalb wird hier eine batteriegestützte Sicherheitsstromversorgung, kurz BSV, mit einem Netzanschluss und einem batteriegestützten Stromversorgungssystem für Wechsel- und Gleichspannung vorgesehen. Durch diese erfolgt die sichere Stromversorgung (SV) mit Wechselspannung zur Versorgung von Therapiegeräten, Mess- und Analysegeräten sowie elektrischen Werkzeugen über einen Trenntransformator und ein IT-Netz 400 V / 230 V AV oder 230 V / 230 V AC sowie eine zusätzliche Isolationsüberwachung zur Detektion.

Nachteilig an diesen Systemen aus dem Stand der Technik ist:
1) Die Stromversorgung erfolgt im ungestörten Betrieb über Gleich- und Wechselrichter und im gestörten Betrieb über Netzanschluss. Das bedeutet hohe Verluste im laufenden Betrieb, erhöhte Ausfallrisiken und einen höheren Verschleiß (Verkürzung der Lebensdauer) der elektronischen Komponenten. Zum Zeitpunkt der Umschaltanforderung kann die Netzzuleitung gestört sein. In dem Fall würde die ATSD direkt auf das Netz umschalten: Betrachtung von zwei gleichzeitigen Fehlern, gefordert 1-Fehler Sicherheit.
2) Die Verwendung einer elektronischen Umschalteinrichtung (EUE / ATSD) darf nicht für OP-Räume der Anwendungsgruppe 2 entsprechend DIN VDE 0100-710:2012-10 Punkt 537.6 und DIN VDE 558-507:2008-12 Punkt 3.10 genutzt werden. Für diese Räume muss entsprechend der hier genannten Norm eine automatische Umschalteinrichtung (ATSE) mit sicherer Trennung eingesetzt werden.
3) Die Verlustleistung ist für Wechsel- und Gleichspannung durch mehrfache Anzahl von Wechsel- und Gleichrichtern für beide Spannungen im Normal- und Sicherheitsbetrieb hoch.
4) Die Umschaltung der Wechselspannung erfolgt über elektronische Umschalteinrichtungen nicht entsprechend den Anforderungen und Vorschriften für medizinische Netzumschaltungen mit drei Schaltstellungen über zusätzliche Schaltstellung "Aus". Es besteht keine zuverlässige Trennung, da Halbleiterbauelemente verwendet werden (auch Normativ in DIN VDE 0100-710 Punkt 537.6 und DIN VDE 558-507 Punkt 3.10 festgelegt).
5) Bei erforderlichem Gerätewechsel muss die BSV abgeschaltet werden. Ein externer Bypass für 230 V Umgehung der BSV Anlage ist nicht vorhanden.
6) Der Einsatz von Ringkerntransformatoren ist nachteilig, weil bei diesen aufgrund des hohen Einschaltstromes erhöhte Risiken und Anlagenkosten bestehen.
7) Die Ausgangsleistung von 2,5 kVA für Wechselspannung und 200 Watt pro Abgang für Gleichspannung ist nicht erweiterbar.
8) Die doppelte elektrische und mechanische Verriegelung der Schaltgeräte der Umschaltung ist nicht vorhanden, und damit besteht ein weiteres Risiko bzgl. möglicher Fehlschaltungen.
9) Es besteht keine Überwachung des IT-Transformators auf Überlast- und Übertemperatur (zwingend für den Betrieb für OP-Räume Anwendungsgruppe 2 entsprechend DIN VDE 0100-710 / IEC 60364-7-710).
10) Die automatische Umschalteinrichtung (EUE), Standardbegriff ATSD, ist ausgeführt für eine unterbrechungslose Umschaltung. Ein Umschalteinrichtung Typ ATSD erfüllt nicht die Kriterien einer Umschaltung für medizinische Bereiche im Sinne der DIN VDE 0100.710 (vgl. DIN VDE 558-507 Punkt 3.10. in Punkt 536), die bei einer zuverlässigen Trennung eingesetzt werden. In der DIN VDE 0100-537:2018-06 wird zuverlässige Trennung wie folgt beschrieben: "... dass Halbleiter nicht zum Trennen eingesetzt werden dürfen ..." (vgl. DIN VDE 0100-530 Punkt 537.2.2.).

Um eine hohe Verfügbarkeit und Betriebssicherheit der elektrischen Stromversorgung sicherzustellen und einen elektrischen Schlag für Patienten zu verhindern, kommt für Geräte mit Wechselspannung die Netzform eines ungeerdeten Stromversorgungssystems zum Einsatz, das auch als isoliertes Netz (Isole Terre - IT) oder als IT-Netz bezeichnet wird. Bei dieser Art des Stromversorgungssystems sind die aktiven Teile des IT-Netzes von dem Erdpotential getrennt - gegen Erde isoliert - oder über eine hochohmige Impedanz mit Erde verbunden. Die Körper (leitfähige Gehäuse) der an das IT-Netz angeschlossenen Verbraucher sind einzeln oder gemeinsam mittels eines Schutzleiters mit dem Erdpotential verbunden (geerdet). Die Umschaltung bei Stromausfall erfolgt über medizinische Netzumschaltung entsprechend der Norm DIN VDE 0100-710:2012-10 / IEC 60364-7-710:2021-05 und DIN VDE 0100-534:2016-10 / IEC 60364-5-53:2019-02 und DIN VDE 0100-540:2012-06 / IEC 60364-5-54:2011-03 mit robusten Lasttrennschalterkontakten mit zuverlässiger Trennung, mechanischer und elektrischer Verriegelung und Überwachung der Schaltstellung sowie einer Umschaltzeit kleiner gleich 0,5 Sekunden (Klasse 0,5) über Schaltstellung "Aus".

Die Operationsleuchten werden mit Schutzkleinspannung betrieben. Die Batteriekapazität wird in Abhängigkeit von der erforderlichen Betriebsdauer der Operationsleuchten projektspezifisch projektiert. Unterbrechungsfreie Stromversorgungsanlagen, kurz USV, für den Einsatz im EDV Bereich entsprechen nicht den Vorschriften für medizinische Anlagen und dürfen in Arztpraxen und MVZ nicht eingesetzt werden.

Entsprechend dem aktuellen Stand der Technik werden in Arztpraxen und MVZ zur sicheren Versorgung der Operationsgeräte mit 230 V Wechselspannung separate und eigenständige batteriegestützte Stromversorgungen BSV (230 V AC) mit Netzanschluss und eigenständiger Batterie- und Gleichrichteranlage und Netzumschaltung über Batteriesystem sowie zusätzliche Bypassschalter für Wartungszwecke verwendet. Die Komponenten der batteriegestützten Stromversorgung BSV (1) (230 V AC) für Wechselspannung haben jeweils separate Batterie und Bypassschalter für Wartung und sind in einem eigenständigen Gehäuse untergebracht.

Die Stromversorgung der Operationsleuchten in Arztpraxen erfolgt derzeit über eine eigenständige Batteriestromversorgung von 24 V mit Gleichspannung in der Schutzmaßnahme PELV (Protective Extra Low Voltage - Schutzkleinspannung). Diese eigenständige Batteriestromversorgung BSV (24 V DC) für Gleichspannung beinhaltet Gleichrichter, Batterie sowie DC-DC-Wandler für jede Operationsleuchte zur Anpassung der Batteriespannung an die Brennspannung der Operationsleuchten sowie zum Ausgleich des Spannungsfalls auf den Zuleitungen. Bei Ausfall der Spannung am Netzanschluss wird die Batterie entladen. Alle Komponenten der Batteriestromversorgung BSV (24 V DC) für Gleichspannung befinden sich in einem eigenständigen Gehäuse. Nachteilig bei dieser Ausführung ist der große Platzbedarf von zwei separaten BSV-Anlagen mit jeweiligen separatem Batteriesystem.

Von der Fa. ESA Elektroschaltanlagen Grimma GmbH ist eine derartige Lösung mit zwei getrennten Anlagen zur Spannungsversorgung mit Wechsel- und Gleichspannung für Arztpraxen aus der Veröffentlichung "Die komplette Stromversorgung für medizinisch genutzte Bereiche mit dem Steuerungs-und Kontrollsystem HospEC"; https:// www.esa-grimma.de/wp-content/uploads/2017/03/HospEC_Technik_web_de.pdf, bekannt. In einer Anlage erfolgt über batteriegestützte Stromversorgung BSV (1) (230 V AC) für Wechselspannung die Versorgung der Steckdosen und über eine zweite Anlage erfolgt die Versorgung über batteriegestützte Stromversorgung BSV (24 V DC) für Gleichspannung der Operationsleuchten nach dem Stand der Technik. Prinzipiell können zwei separate Einspeiseleitungen nach den anerkannten Regeln der Technik (DIN VDE 0558-507:2008-12) bestehen. Abweichend von der Darstellung ist eine einzige Einspeiseleitung über Netzanschluss für die batteriegestützte Stromversorgung BSV (1) (230 V AC) für Wechselspannung normenkonform. Bei zwei Einspeiseleitungen existieren eine alternative Einspeiseleitung und eine bevorzugte Einspeiseleitung. Maßgebend ist das Erfordernis von zwei getrennten Batteriesystemen mit jeweiligen Gleichrichter und Batterie. Über Gleichrichter werden die angeschlossenen Batterien bei vorhandener Netzspannung geladen. Bei einem Ausfall der Spannung am Eingang des Gleichrichters wird die Batterie entladen. Die Spannung der Batterie wird für Wechselspannung über Wechselrichter umgeformt und über eine medizinische Netzumschaltung auf einen IT-Netz-Trafo geschaltet.

Nachteilig am aktuellen Stand der Technik für den Einsatz in Arztpraxen und medizinischen Versorgungszentren ist:
- hoher Platz- und Kostenbedarf für beide Anlagen mit jeweils separater eigenständigen Batterie- und Gleichrichteranlage,
- keine Redundanz der gesamten Stromversorgung,
- bei Gerätestörungen sind zur deren Abstellung Betriebsunterbrechung notwendig,
- hoher Aufwand bei projektspezifischer Erweiterungen der Anlagen bei erforderlicher höherer Leistung.

Ferner ist aus DE 10 2011 009 457 A1 ein AC/DC Notstrom-Gebäudeversorgungsnetz bekannt. Im Normalbetrieb wird über einen einzelnen bi-direktionalen Wechselrichter ein angeschlossenes Gleichspannungsnetz versorgt. Im Fall des Ausfalls der Versorgungsspannung kann über den entgegengesetzten Betrieb des Wechselrichters mit Hilfe der Batterieanlage AC Verbraucher versorgt werden. Diese technische Lösung erscheint für normale Gebäude sinnvoll zu sein, weist jedoch für den Einsatz in Arztpraxen und medizinischen Versorgungszentren gravierende Nachteile auf:
- Es ist keine mechanische und/oder elektrische Verrieglung der Schalter vorhanden, wodurch im Rahmen der Umschaltungen Fehler entstehen können. Z.B. könnten durch eine falsche Schaltreihenfolge Kurzschlüsse entstehen.
- Es ist keine Laienbedienbarkeit der beschriebenen Anlage vorhanden, d.h. bei einem Ausfall einer Komponente ist auf jeden Fall eine Elektrofachkraft hinzuzuziehen, welche im Gegensatz zu Krankenhäusern oder größeren Gebäuden nicht dauerhaft vor Ort ist.
- Es ist keine Redundanz der einzelnen betriebswichtigen Anlagenteile wie Gleichrichter, Wechselrichter und Umrichter vorhanden.
- Dieser Stand der Technik weist eine Begrenzung auf eine einzelne DC-Versorgungsanlage bzw. Spannungsebene auf und stellt aus diesem Grund keine Versorgung unterschiedlicher DC Verbraucher z.B. 5 V, 24 V, 60 V zur Verfügung. Somit besteht gleichzeitig eine Begrenzung der Kabellängen auf Basis des Spannungsabfalls.
- Es besteht keine dauerhafte Überwachung der betriebswichtigen Anlagenbestandteile wie Gleichrichter, Batterien, Wechselrichter und Umrichter.
- Es ist keine dauerhafte Überwachung der AC und DC Verbraucher auf Fehler und Warnmeldungen vorhanden.
- Es bestehen keine vollumfänglichen Bypass-Schaltungen, bei denen einzelne DC Anlagenteile wie Batterieanlage oder Umrichter usw. für Wartungszwecke abgeschaltet werden können.
- Es gibt keine Möglichkeit der Einspeisung über eine zusätzlich Gleichspannungsquelle, z.B. eine Solaranlage, welche zusätzlich die Batterieanlage bei einem längeren Energieausfall über einen bidirektionalen Umrichter einspeisen kann.

Weiterhin sind von der Fa. RSV-Ruhstadt (Quelle: Elektropraktiker (2006) 12 Seiten 10-20) batteriegestützte Stromversorgungssysteme BSV für die Stromversorgung von Operationsleuchten mit Gleichspannung und Steckdosen mit Wechselspannung für Krankenhäuser, Arztpraxen und medizinischen Versorgungszentren (MVZ) in platzsparender Ausführung bekannt, die über einen zentralen Netzanschluss und ein Batteriesystem, bestehend aus einem ersten Gleichrichter, einer Batterie, einem Wechselrichter und einer elektronischen Umschalteinrichtung (als EUE oder ATSD bezeichnet) bestehen. Diese versorgen die Steckdosen über ein mit Ringkerntransformator gebildetes IT-Netz mit Wechselspannung über Wechselrichter und Operationsleuchten mit Gleichspannung über einen zweiten Gleichrichter.

Entsprechend der Produktinformation der Fa. RSV-Ruhstrat Stromversorgungen GmbH besteht das BSV-Gerät zur Stromversorgung von Arztpraxen und MVZ aus einem Netzanschluss und einem Batteriesystem mit Gleich- und Wechselrichter und elektronischer Umschalteinrichtung (EUE / ATSD) zur Umschaltung bei Störung am Netzanschluss, wobei die Batterie über Gleichrichter mit dem Netzanschluss und über Wechselrichter mit einem ersten Kontakt der elektronischen Umschalteinrichtung verbunden ist. Der Netzanschluss ist außerdem direkt mit dem zweiten Kontakt der elektronischen Umschalteinrichtung verbunden und beide Kontakte der elektronischen Umschalteinrichtung sind ausgangsseitig parallel geschaltet und versorgen eine Abgangsleitung. Die Abgangsleitung ist zum einen mit dem IT-Netz Ringkerntransformator für die Spannungsversorgung der Steckdosen und zum anderen über weitere Gleichrichter, die Kleinspannung für die Operationsleuchten liefern, verbunden. Die elektronische Umschalteinrichtung schaltet stets vorrangig auf Leitung 1, so dass der nachgeschaltete Ringkerntransformator über Gleichrichter und Wechselrichter und die Operationsleuchten über diese und zusätzlichen Gleichrichter gespeist wird. Im ungestörten Normalbetrieb erfolgt die gesamte Stromversorgung über Leitung 1 und bei Aktivierung der Umschaltung der Stromversorgung bei niedriger Spannung auf Leitung 1 erfolgt die Umschaltung über Spannungswächter von Leitung 1 auf Leitung 2 über die elektronischen Umschalter der elektronischen Umschalteinrichtung direkt über deren Schaltzustände leitend oder nichtleitend und ohne mechanische Verriegelung der Schaltzustände beider elektronischer Umschalter der

Es besteht folglich der Bedarf an einem batteriegestützten Stromversorgungssystem BSV für medizinische Einrichtungen, insbesondere für Arztpraxen und Medizinische Versorgungszentren (MVZ) unter Einhaltung der Forderung DIN VDE 0100-710 .560 "Die Stromversorgung für Sicherheitszwecke muss den Weiterbetrieb automatisch übernehmen, wenn die Spannung eines oder mehrerer aktiver Leiter am Hauptverteiler des Gebäudes der allgemeinen Stromversorgung auf weniger 90 % der Nennspannung abfällt." Dafür bestehen für das batteriegestützte Stromversorgungssystem folgende Aufgaben:
> vorrangiger Betrieb über Netzanschluss und Allgemeine Stromversorgung AV sowie Sicherheitsbetrieb über Sicherheitsstromversorgung SV über Batteriesystem,
> normengerechte Ausführung entsprechend den geltenden Normen für Krankenhäuser,
> minimale Verlustleistung des gesamten BSV mit normenkonformer medizinischer Netzumschaltung nach DIN EN 60947-6-1:2014-09 mit folgenden Anforderungen:
   - medizinische Netzumschaltung mit dreistufige sicherheitsbezogener Umschaltung über "AUS",
   - elektrische und mechanische Verrieglung der Schaltgeräte der medizinischen Netzumschaltung,
   - kurzschlussfeste Schaltkontakte,
   - manuelle und automatische Umschaltung,
> modulare Ausführung für einfache Wartung sowie Erweiterung der gesamten Anlage vor Ort bei Bedarf, bspw. bei erforderlicher längerer Brenndauer der Operationsleuchten,
> hohe Betriebssicherheit, d.h. z.B. Wechsel von defekten Geräten im laufenden Betrieb ohne Abschaltung und ohne Betriebsunterbrechung,
> Fehlersicherheit ohne Betriebsunterbrechung, d.h. einfache Erweiterung bei Bedarf vor Ort ohne projektspezifische Änderungen der vorhandenen Anlage,
> 1-Fehlersicherheit der kompletten Anlage, bestehend aus BSV und Umschalteinrichtung und IT-Netz,
> Kombination von 230 V AC BSV Anlage, 24 V DC BSV Anlage, Umschalteinrichtung für med. genutzte Bereiche, Isolationsüberwachung,
> Einzelkreisfehlersuche für jeden Abgang 230 V und jeden Abgang 24 V DC, beim Auftreten eines Isolationsfehlers im System wird der defekte Abgangskreis detektiert und gemeldet,
> normkonformes Batteriesystem für 230V AC und 24V DC Verbraucher.

Angesichts der Nachteile des Standes der Technik liegt der vorliegenden Erfindung die Aufgabe zugrunde, eine Vorrichtung zur Stromversorgung von Geräten in medizinischen Einrichtungen bereitzustellen und ein entsprechendes Verfahren zur Stromversorgung von Geräten in medizinischen Einrichtungen anzugeben, welche diese Nachteile überwinden.

Diese Aufgabe wird in einem ersten Aspekt der vorliegenden Erfindung durch eine Vorrichtung zur batteriegestützten Stromversorgung von Geräten mit Wechselspannung AC und Gleichspannung DC für medizinische Einrichtungen entsprechend dem Anspruch 1 gelöst.

Bei den medizinischen Einrichtungen handelt es sich insbesondere um medizinische Einrichtungen der Gruppe 2 mit der normativen Definition der Räume der Gruppe 2 nach DIN VDE 0100-710:2012-10. Die Definition der Gruppe 2 nach Punkt 710.3.7 lautet: "medizinisch genutzter Bereich, in dem Anwendungsteile wie folgt eingesetzt werden: - intrakardiale Verfahren oder - lebenswichtige Behandlungen und chirurgische Operationen, wo eine Unterbrechung (Fehler) in der Stromversorgung Lebensgefahr verursachen kann".

Die Bezeichnung "Operationsleuchten (14)" steht im Rahmen der vorliegenden Erfindung als ein typisches Beispiel stellvertretend für DC-Verbraucher (Gleichstromverbraucher) und schränkt die Erfindung darauf nicht ein. Weitere typische DC-Verbraucher sind u.a. die OP-Tischsteuerung, Kommunikationsgeräte wie Gegensprechanlagen oder Ladestationen für Dect-Telefone und Ladestationen für Operationsgeräte wie z.B. Bohrmaschinen.

Eine bevorzugte Ausgestaltung der erfindungsgemäßen Vorrichtung zur batteriegestützten Stromversorgung sieht vor, dass zur Sicherung der Redundanz und Vermeidung von Betriebsstörungen der manuelle Bypass (35) zur vollständigen elektrischen Freischaltung des IT-Netzes (7) vom Batteriesystem (46) für Wartungszwecke im IT-Systemverteiler (54) angeordnet ist

Es hat sich zur Vermeidung von vollumfänglichen Betriebsstörungen als vorteilhaft erwiesen, wenn alle Stromkreise mit einem separaten Sicherungs- und Schaltelement (56) ausgestattet sind, wodurch bei Störung, wie Kurzschluss in einem Stromkreis, nur dieser gestört ist und die anderen ungestört bleiben

Es hat sich ferner zur Vermeidung von Betriebsstörungen als vorteilhaft erwiesen, wenn alle Stromkreise mit Gleichspannung DC separater Isolationsüberwachung (8) und Überwachungseinrichtung (57) über Meldung dauerhaft überwachbar sind.

Die erfindungsgemäße Vorrichtung kann in einer anderen Weiterbildung zur Vermeidung von Betriebsstörungen durch falsche Bedienung der Schalteinrichtungen, wie der medizinischer Netzumschaltung (12), des manuellen Bypass (35), des elektronischen Bypass, alle laienbedienbaren Schalteinrichtungen durch mechanische und/oder elektronische Verrieglungen gegen fehlerhafte Bedienung gesichert sein.

Zur Vermeidung von Betriebsstörungen durch alterungsbedingte Abnutzung ist es erfindungsgemäß bevorzugt, wenn alle betriebswichtigen Anlagenbestandteile elektronische Umschalteinrichtung EUE (4), Wechselrichter (9), Gleichrichter (49), Batterie (18), Umrichter (11) durch integrierte Überwachungseinrichtungen und Meldung dauerhaft überwachbar sind.

Es hat sich ferner als vorteilhaft herausgestellt, wenn das Batteriesystem (46) Racks zum Bestücken mit Umrichtern (11) verschiedener Ausgangsspannungsebenen enthält und diese jeweils mit Erweiterungs-Racks Umrichter (62) und/oder Sicherheits-Racks Umrichter (63) verbunden sind, so dass dadurch bei Gerätestörung eine Redundanz n+1 besteht.

In einer Ausführungsform der Erfindung können die Gleichrichter AC/DC (49) und/oder die Wechselrichter DC/AC (9) und/oder die Umrichter DC/DC (11) als werkzeuglose Einschubeinrichtungen ausgeführt sein. Somit wird sichergestellt, dass bei Störung während des laufenden Betriebes ohne Unterbrechung des Betriebes die diese Komponenten durch elektrotechnische Laien austauschbar sind.

In Weiterbildung dieser speziellen Ausführungsform ist vorgesehen, dass zumindest ein Umrichter (11) bi-direktional verwendbar ist und über diesen eine zusätzliche Gleichspannungsquelle anschließbar ist, welche im Falle einer Versorgung der Verbraucher (14) und der Steckdosen (15) über die Batterie eine ausreichende Ladung der Batterie (18) sicherstellt.

In einer Weiterbildung der erfindungsgemäßen Vorrichtung ist zwischen Netzanschluss (6) und Sicherheitsstromversorgung SV (22) des Batteriesystems (46) zumindest ein Erweiterungs-Rack Gleichrichter (32) und / oder zumindest ein Sicherheits-Rack Gleichrichter (34) geschaltet und / oder zwischen Sicherheitsstromversorgung SV (22) und Ausgang Wechselrichter (9) des Batteriesystems (46) zumindest ein Erweiterungs-Rack Wechselrichter (31) und / oder zumindest ein Sicherheits-Rack Wechselrichter (33) geschaltet.

Entsprechend der Erfindung ist zwischen dem zweitem Lasttrennschalter (40) der medizinischen Netzumschaltung (12) und Allgemeiner Stromversorgung AV (21) ein manueller Bypass (35) geschaltet und ein weiterer Eingang desselben mit einem elektronischen Bypass (19) verbunden, der eingangsseitig mit Allgemeiner Stromversorgung AV (21) und über Wechselrichter (9) mit der Sicherheitsstromversorgung SV (22) verbunden ist.

Eine andere Weiterbildung der erfindungsgemäßen Vorrichtung sieht vor, dass das Batteriesystem (46) Racks zum Bestücken von Gleichrichter (49) und Wechselrichter (9) enthält und diese mit Erweiterungs-Racks Gleichrichter (32), Erweiterungs-Racks Wechselrichter (31), Sicherheits-Racks Gleichrichter (34) und Sicherheits-Racks Wechselrichter (33) verbunden sind, so dass dadurch bei Gerätestörung eine Redundanz n+1 besteht.

Die vorstehend genannte Aufgabe wird in einem zweiten Aspekt der vorliegenden Erfindung durch ein Verfahren zur batteriegestützten Stromversorgung von Geräten mit Wechselspannung AC und Gleichspannung DC für medizinische Einrichtungen entsprechend dem Anspruch 10 gelöst.

Bei den medizinischen Einrichtungen handelt es sich auch hier insbesondere um medizinische Einrichtungen der Gruppe 2, wie sie vorstehend definiert wurden.

Eine Weiterbildung des erfindungsgemäßen Verfahrens sieht vor, dass Operationsleuchten (14) mit Gleichspannung bei ungestörtem und gestörtem Netzanschluss (6) über die Sicherheitsstromversorgung SV (22) und Umrichter (11) mit Strom bzw. Spannung versorgt werden.

In einer bevorzugten Ausführungsform des erfindungsgemäßen Verfahrens werden Steckdosen (15) mit Wechselspannung bei gestörtem Netzanschluss (6) über einen manuellen Bypass (35) und / oder einen elektronischen Bypass (19) über den zweiten Lasttrennschalter (40) der medizinischen Netzumschaltung (12) und Trenntransformator (5) versorgt.

Eine andere Weiterbildung des erfindungsgemäßen Verfahrens bezieht sich darauf, dass bei gestörtem Netzanschluss (6) über elektronischen Bypass (19) die Spannungsversorgung für Steckdosen über diesen automatisch von Netzanschluss (6) auf Batteriesystem (46) umschaltet.

Eine weitere bevorzugte Ausführungsform des erfindungsgemäßen Verfahrens sieht vor, dass in zumindest einem vorverdrahteten Reserveplatz (Rack) (32, 34, 31, 33) zusätzliche oder fehlerfreie Gleichrichter AC/DC (9) und / oder Wechselrichter (9) für Erweiterungen und Sicherheit bei Gerätestörung mittels werkzeuglosem Wechsel der Gleichrichter (49) und / oder der Wechselrichter (9) im laufenden Betrieb ohne Betriebsunterbrechung gesteckt werden.

Das erfindungsgemäße Verfahren kann bevorzugt ferner eine Isolationsüberwachung (8) für jeden Stromkreis und jede Steckdose (15) sowie die Operationsleuchten (14) vorsehen.

Das erfindungsgemäße Verfahren kann entsprechend einer nicht beanspruchten Weiterbildung , ferner eine zusätzliche Energieeinspeisung über einen bi-direktional verwendbaren Umrichter (11) mittels einer diesem angeschlossenen Gleichspannungsquelle bereitstellen, welche die Spannungsversorgung als Alternative zur Batterie (18) sicherstellt. Dabei kann diese Spannungsversorgung allein als auch in Kombination mit der Batterie (18) betrieben werden.

Schließlich bezieht sich eine andere nicht beanspruchte Weiterbildung des erfindungsgemäßen Verfahrens auf das Vorsehen ferner einer elektronischen Überwachung aller Sicherungselemente für das Batteriesystem (46) sowie Meldung bei Auslösen einer Sicherung über Meldekontakte und/oder digitale Meldungen an den Nutzer.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figur. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1:: ein Blockschaltbild einer Stromversorgung für Therapiegeräte und Operationsleuchten in Krankenaus entsprechend dem Stand der Technik (Quelle: ESA Grimma),
- Fig. 2:: ein Blockschaltbild einer batteriegestützten Stromversorgung für Therapiegeräte und Operationsleuchten in Arztpraxis entsprechend dem Stand der Technik,
- Fig. 3:: ein Blockschaltbild einer batteriegestützten Stromversorgung BSV (1) für Therapiegeräte und Operationsleuchten in Arztpraxis mit einer Batterie entsprechend dem Stand der Technik (Quelle: RSV-Ruhstadt),
- Fig. 4:: ein Blockschaltbild der erfindungsgemäßen batteriegestützten Stromversorgung BSV (1) für Therapiegeräte und Operationsleuchten in Arztpraxis und MVZ nach einer bevorzugten Ausführungsform der vorliegenden Erfindung
- Fig. 4a: das in Fig. 4 gezeigte Blockschaltbild der erfindungsgemäßen batteriegestützten Stromversorgung BSV (1) in einer bevorzugten Ausführungsform,
- Fig. 5:: ein erweitertes Blockschaltbild der erfindungsgemäßen batteriegestützten Stromversorgung BSV (1) für Therapiegeräte und Operationsleuchten in Arztpraxis und MVZ mit allen Schutzfunktionen und
- Fig. 5a: das in Fig. 5 gezeigte Blockschaltbild der erfindungsgemäßen batteriegestützten Stromversorgung BSV (1) in einer bevorzugten Ausführungsform.

Eine besonders bevorzugte, die vorliegende Erfindung aber nicht beschränkende Ausführungsform bezieht sich auf eine Vorrichtung zur sicheren Stromversorgung von Geräten in medizinischen Einrichtungen, die umfasst eine Batterieanlage mit einem Batteriesystem für 230 V AC und 24 V DC Verbraucher, eine Umschalteinrichtung (ATSE) und ein IT-Netz.

Für Räume der Gruppe 2 in medizinischen Einrichtungen sind zwingend zwei unabhängige Einspeisungen für die Umschalteinrichtung mit nachgeordnetem IT-Netz vorgeschrieben. In Krankenhäusern geschieht das durch zwei unabhängige 20 kV Einspeisungen oder durch 20 kV Einspeisung und Notstromaggregat. Die vorliegende Erfindung hingegen stellt die Sicherheitsstromversorgung mittels Batteriesystem selbst her. Viele Arzt-Praxen, Ambulante Chirurgen, Augenärzte, etc. verfügen nur über die normale Allgemeine Stromversorgung, wie sie in Gebäuden wie Mietshäusern vorgesehen ist.

Für diese Zielgruppe wurde die vorliegende erfindungsgemäße Vorrichtung entwickelt, welche die gleiche Sicherheit wie in einer Klinik gewährleistet, jedoch eine andere Umsetzung vorsieht:
- eine sichere Trennung der Netze Allgemeine Stromversorgung (AV) und Sicherheitsstromversorgung (SV) mittels Umschalteinrichtung (ATSE) mit Lasttrennschaltern,
- eine aktive Überwachung aller möglicher Fehlerquellen, wodurch sich ein 1-Fehler sicherer Aufbau der Umschalteinrichtung mit IT Netz und Batterieanlage ergibt, welcher zugleich zu detektieren und zu melden ist,
- eine aktive Isolationsüberwachung (8) aller angeschlossenen Verbraucher 230 V AC und 24 V DC.

Der "1-Fehler" Aufbau bedeutet, dass ein Fehler egal welcher Art nicht zum Ausfall der Anlage oder zu einer gefährlichen Situation für den Patienten oder der behandelt Person führt.

Gleiche Bezugszeichen benennen in den Figuren die gleichen Elemente, aus Gründen der Übersichtlichkeit werden aber nicht alle Bezugszeichen in allen Figuren angegeben.

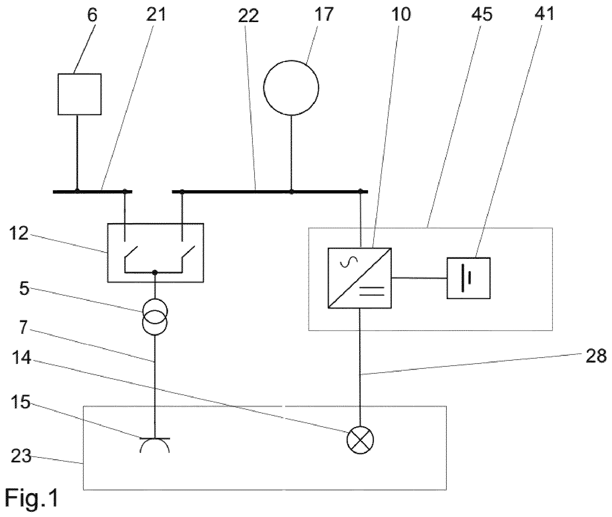

In Figur 1 ist die prinzipielle Stromversorgung für ein Krankenhaus entsprechend dem Stand der Technik mit Steckdosen und Operationsleuchten für OP-Räume der Anwendungsgruppe 2 entsprechend aktuellen Sicherheitsanforderungen dargestellt. Entsprechend der Norm DIN VDE 0100-710 werden medizinische Räume mit unterschiedlichen Anforderungen in drei Kategorien eingeteilt. Für Räume der Anwendungsgruppe 2 ist für invasive medizinische Operationen eine durchgehende Stromversorgung der Niederspannungsanlage erforderlich, um lebensbedrohliche Gefahren für den Patienten bei Ausfall der Geräte zu vermeiden. Dafür ist zusätzlich zur Allgemeinen Stromversorgung AV (21) mit Anschluss an das öffentliche Netz (6) eine sichere Stromversorgung SV (22), mit bspw. einen Generator G (17) erforderlich. Im Normalbetrieb ist die allgemeinen Stromversorgung AV (21) und die sichere Stromversorgung SV (22) über einen Kuppelschalter AV+SV (nicht dargestellt) verbunden. Bei einer Störung im öffentlichen Netz wird der Kuppelschalter AV+SV automatisch geöffnet und die Einspeisung der sicheren Stromversorgung SV (22) zum Beispiel über einen Generator innerhalb von 15 Sekunden wieder hergestellt. In dieser Zeitspanne werden die Verbraucher 230 V AC nicht versorgt. Über eine automatische Netzumschaltung ATSE (12) erfolgt bei einer Störung der sicheren Stromversorgung SV (22) die Umschaltung von sicherer Stromversorgung SV (22) auf die allgemeine Stromversorgung AV (21). Über einen Trenntransformator (5) wird ein IT-Netz(7) mit Wechselspannung für die Steckdosen (15) und über Gleichrichter (10) und Batterie (41) die Gleichspannung (28) für die Operationsleuchten (14) erzeugt. Die Operationsleuchten (14) dürfen zu keinem Zeitpunkt unterbrochen werden. Bei Ausfall der Allgemeinen Stromversorgung (21) werden die Operationsleuchten (14) über das Batteriesystem für Gleichspannung DC (45) versorgt. Der Zeitraum der Versorgung hängt maßgeblich von der Dimensionierung der Batterien (41) und der Leistung der Operationsleuchten (14) ab. Die zusätzlich erforderliche Isolationsüberwachung (8) ist nicht dargestellt.

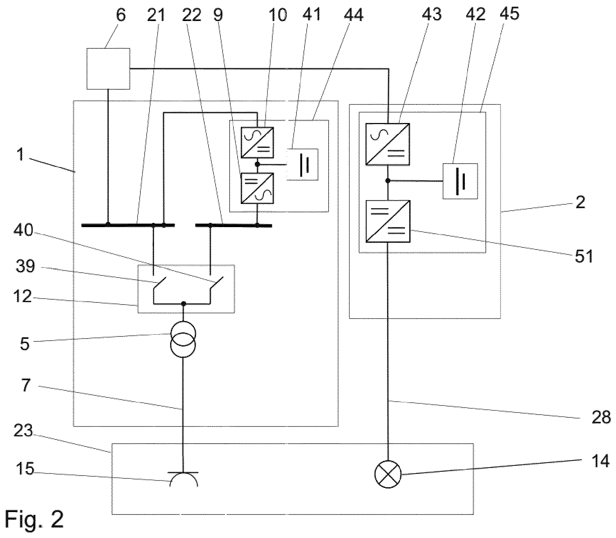

Figur 2 zeigt die prinzipielle Stromversorgung für eine Arztpraxis entsprechend dem aktuellen Stand der Technik mit den gleichen Sicherheitsanforderungen wie für ein Krankenhaus. Zusätzlich zur Allgemeinen Stromversorgung AV (21) mit Anschluss an das öffentliche Netz (6) ist eine erste batteriegestützte Stromversorgung BSV (1) 230 V mit Gleichrichter (10), Batterie (41) und Wechselrichter (9) mit automatischer Netzumschaltung ATSE (12) für Wechselspannung für die Steckdosen (15) verbunden und eine zweite batteriegestützte Stromversorgung BSV (2) 24 V mit Gleichrichter (43) und Batterie (42) für Gleichspannung (28) für die Operationsleuchten (14) anstelle des Generators vorhanden. Die zusätzlich erforderliche Isolationsüberwachung (8) ist nicht dargestellt.

Figur 2 demonstriert den Aufbau einer batteriegestützten Stromversorgung BSV (1) 230 V AC für Steckdosen mit Wechselspannung und den Aufbau einer batteriegestützten Stromversorgung BSV (2) 24 V DC für Operationsleuchten mit Gleichspannung nach dem Stand der Technik ohne Angaben über die zusätzlich erforderlichen Schutz- und Überwachungseinrichtungen, wie bspw.

Isolationsüberwachung, Sicherungen und Schutzschalter. Prinzipiell können zwei separate Einspeiseleitungen nach den anerkannten Regeln der Technik (DIN VDE 0558-507) bestehen. Abweichend von der Darstellung ist eine einzige Einspeiseleitung über Netzanschluss (6) für die batteriegestützte Stromversorgung BSV (1) (230 V AC) für Wechselspannung normenkonform. Bei zwei Einspeiseleitungen existieren eine alternative Einspeiseleitung und eine bevorzugte Einspeiseleitung. Die bevorzugte Einspeiseleitung wird i.d.R. über ein Schaltelement mit dem Gleichrichter des Batteriesystems für Wechselspannung (44) verbunden. Der Gleichrichter (10) lädt die angeschlossenen Batterien (41). Bei einem Ausfall der Spannung am Eingang des Gleichrichters (10) wird die Batterie (41) entladen. Die Spannung der Batterie (41) wird über einen Wechselrichter (9) zu einer Wechselspannung umgeformt. Der Ausgang des Wechselrichters (9) wird über die Sicherheitsstromversorgung SV und über allgemeine Stromversorgung AV mit der medizinischen Netzumschaltung (12) verbunden.

In der zweiten batteriegestützten Stromversorgung BSV (24 V DC) für Gleichspannung der Operationsleuchten ist der Aufbau nach dem aktuellen Stand der Technik dargestellt. In gleicher Art und Weise können auch hier bis zu zwei Einspeiseleitungen nach den anerkannten Regeln der Technik bestehen. In Figur 2 ist eine Einspeiseleitung über einen Netzanschluss (6) vorhanden, die ggf. über einen separaten Trenntransformator einen Gleichrichter (43) speist. Der Gleichrichter (43) lädt die angeschlossenen zweiten Batterien (42). Bei einem Ausfall der Spannung am Eingang des Gleichrichters (43) wird die zweite Batterie (42) entladen. Die Spannung der zweiten Batterie (42) wird über einen einstellbaren Umrichter DC/DC (51) an die jeweilige Brennspannung der Operationsleuchte umgeformt. Der Ausgang des einstellbaren Umrichters DC/DC (51) speist nachfolgend eine Operationsleuchte (14).

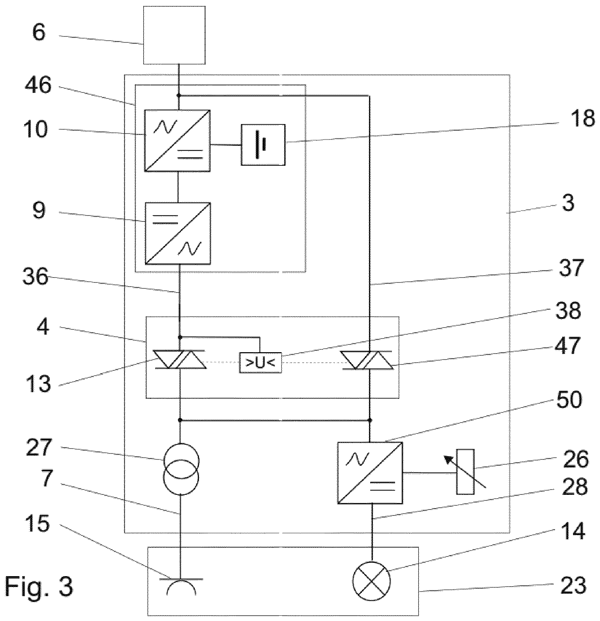

Figur 3 zeigt das prinzipielle Blockschaltbild für eine Stromversorgung für Arztpraxen entsprechend der Produktinformation der Fa. RSV-Ruhstrat Typ R-BSV Ultimate-Kombi in platzsparender Ausführung mit einer Batterie (18) und unterbrechungsfreier Umschaltung mittels elektronischer Umschalteinrichtung EUE (4) über elektronische Umschalter (13). Charakteristisch ist, dass die bevorzugte Einspeisung über die erste Leitung (36) aus der Sicherheitsstromversorgung des Batteriesystems (46) und über die zweite Leitung (37) die allgemeine Stromversorgung über Netzanschluss (6) bei ungestörtem Netzanschluss (6) erfolgt. Bei einer Störung der bevorzugten Einspeisung erfolgt die Stromversorgung über einen statischen Bypass, der als elektronische Umschalteinrichtung EUE (4) ausgeführt ist und nach internationaler Bezeichnung mit ATSD (Automatic Transfer-Switching- Device) bezeichnet wird.

Die elektronische Umschalteinrichtung EUE (4) hat einen ersten elektronischen Umschalter (13), der mit dem Ausgang eines Wechselrichters DC/AC (9) des Batteriesystems (46) verbunden ist, und einen zweiten elektronischen Umschalter (47), der mit dem Netzanschluss (6) verbunden ist. Das Batteriesystem (46) besteht aus erstem Gleichrichter AC/DC (10), Batterie (18) und Wechselrichter DC/AC (9) für die Stromversorgung über die erste Leitung (36) und dazu parallel eine zweite Leitung (37) zwischen Netzanschluss (6) und zweitem elektronischem Umschalter (47) der elektronischen Umschalteinrichtung EUE (4). Die Ausgänge der elektronischen Umschalteinrichtung UEU (4) sind parallel geschaltet und versorgen parallel über einen Ringkerntransformator (27) ein IT-Netz (7) mit Wechselspannung 230 V AC für Steckdosen (15) und für Operationsleuchten (14) über einen zweiten Gleichrichter(50) mit Gleichspannung .

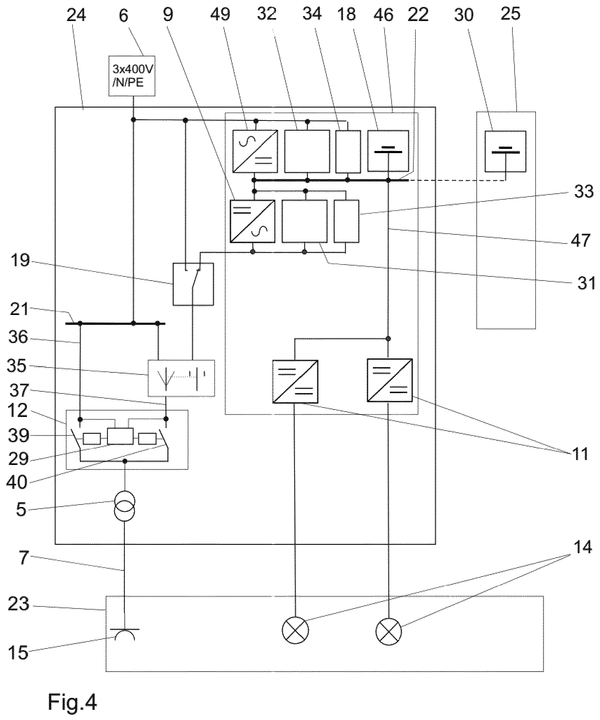

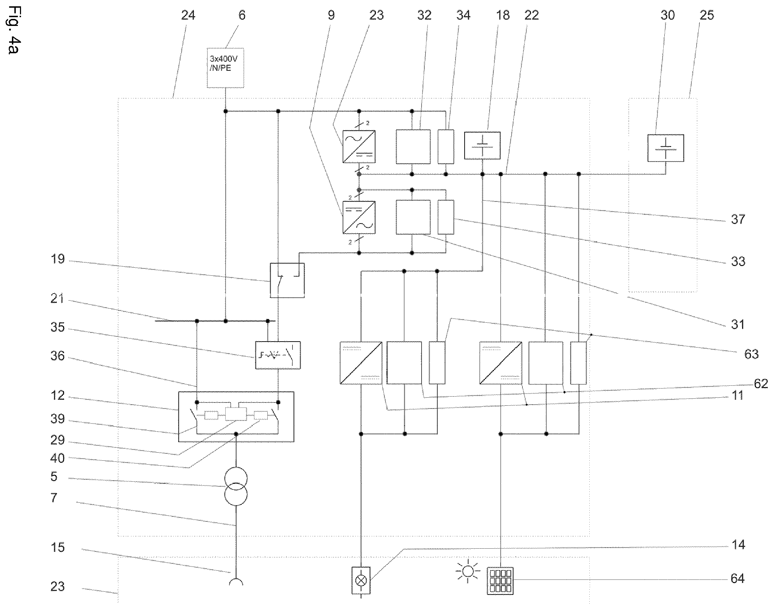

Figur 4 zeigt das Blockschaltbild für eine sichere Stromversorgung für Arztpraxen und MVZ entsprechend der vorliegenden Erfindung mit einem Netzanschluss (6) und einem Batteriesystem (46) in modularer Ausführung der Leistung und Steuerung, bestehend aus einem BSV Grundverteiler (24) und einem BSV-Erweiterungsverteiler (25).

Der BSV Grundverteiler (24) besteht im Wesentlichen aus der medizinischen Umschalteinrichtung (12) mit Steuerungs- und Überwachungseinrichtung (29) und erstem Lasttrennschalter (39) und zweitem Lasttrennschalter (40), die für eine zuverlässige Trennung sorgen, sowie dem IT-Netz-Transformator (5) und dem Batteriesystem (46). Über einen manuellen Bypass (35) lässt sich das Batteriesystem (46) für Wartungszwecke vollständig umgehen. Das Batteriesystem (46) besteht aus dreiphasigen, modularen Gleichrichtermodulen (49) sowie einem redundanten Gleichrichtermodul (32) und zwei Reserve-Plätzen (34) für zusätzliche Gleichrichtermodule. Über die Gleichrichtermodule (49) wird die Sicherheits-Stromversorgung (22) gespeist, die mit der Batterie (18) abgesichert ist und mit einer zusätzlichen Batterie (30) in einem Erweiterungsschrank (25) je nach Erfordernis erweitert werden kann. Aus der Sicherheits-Stromversorgung werden der Wechselrichter (9) zur Versorgung der 230 V AC-Verbraucher (15) sowie die DC/DC-Wandler (11) zur Versorgung der Operationsleuchten (14) gespeist. Gleich- und Wechselrichter lassen sich über einen internen (statischen) Bypass mit automatischem Umschalter ATSD (19) unterbrechungsfrei umgehen.

Charakteristisch ist, dass die bevorzugte Einspeisung aus der allgemeinen Stromversorgung AV (21) über den Netzanschluss (6) und die Sicherheit-Stromversorgung SV (22) aus dem Batteriesystem (46) entsprechend der Vorschrift 0100-710 / IEC 60364-7-710 erfolgt.

Die Gleichrichtermodule (32) sind als n+1 System ausgelegt. Dies bedeutet, bei Ausfall eines Gleichrichters ist immer noch die komplette Anlagenverfügbarkeit gewährleistet. Der Fehler in einem Gleichrichtermodul (49) wird detektiert und gemeldet.

Der Wechselrichter (9) sowie der Erweiterungs-Rack Wechselrichter (31) und Sicherheits-Rack Wechselrichter (33) sind über den statischen Bypass der BSV (19) auf den zweiten Lasttrennschalter (40) geführt. Außerdem ist der Netzanschluss (6) auf den manuellen Bypass (35) der BSV geführt, so dass über den manuellen Bypass (35) der BSV bei Störung des Batteriesystems oder für Wartung die Versorgung mit Wechselspannung umgeschaltet werden kann.

Über die medizinische Netzumschaltung (12) wird automatisch in Abhängigkeit der Spannungen zwischen der allgemeinen Stromversorgung AV (21) und Sicherheit-Stromversorgung SV (22) entsprechend den Vorschriften für Krankenhäuser umgeschaltet. Bei ungestörten Netzanschluss (6) erfolgt der Betrieb über den internen Bypass (19) zum manuellen Bypass (35) und dann auf zweite Leitung (37), so dass der Trenntransformator (5), das IT-Netz (7) und die Steckdose (15) mit Wechselspannung direkt aus dem Netzanschluss (6) versorgt und nur bei Netzausfall aus der Sicherheits-Stromversorgung (22) über den Wechselrichter (9) versorgt werden. Die Sicherheits-Stromversorgung SV (22) wird im ungestörten Betrieb aus den Gleichrichtern (49) mit Gleichspannung versorgt und über DC/DC-Wandler (11) erfolgt die Anpassung der Gleichspannung der Betriebsspannung zur Versorgung der Operationsleuchten (14).

Bei Störung am internen Bypass (19) wird über die Steuerung der medizinischen Netzumschaltung (29) zuerst der zweite Lasttrennschalter (40) ausgeschaltet und der erste Lasttrennschalter (39) in nicht dargestellter elektrischer und mechanischer Verriegelung über Schaltstellung "Aus" innerhalb von 500 ms automatisch zugeschaltet.

Alle sicherheitsrelevanten Geräte werden aktiv überwacht. Dies betrifft unter anderem alle Sicherungselemente, Schalter (39, 40), Spannungen (6, 36, 37), Gleich- und Wechselrichter (9, 49), Steuergeräte (12), IT-Netz-Trafo (5), Display und Kommunikationsmodule. Bei einem Ausfall / Störung wird die Fehlerquelle erkannt und ein sicherer Zustand der Anlage automatisch hergestellt. Der Anlagenzustand wird diagnostiziert und dem Nutzer unverzüglich mitgeteilt. Die komplette Anlage bestehend aus BSV Grundverteiler (24), medizinischer Umschalteinrichtung (12), IT-Netz (7) und Batteriesystem (46) ist mit 1-Fehler sicher aufgebaut. Beim Auftreten eines Fehlers ist ein sicherer Weiterbetrieb der Anlage möglich. Damit können begonnene Operationen bzw. Behandlungen zu Ende geführt werden, ohne die Sicherheit des Patienten oder der behandelnden Person zu gefährden. Durch die zielgerichtete Diagnostik wird die Fehlersuche im erheblichem Maße eingeschränkt. Dies führt zu einer schnellen und zielgerichteten Reparaturmöglichkeit.

Die aus Sicherheitsgründen vorgeschrieben Überwachungsgeräte, wie bspw. Isolationsüberwachung (8) und Sicherungen sind nicht dargestellt.

Zur Erhöhung der Sicherheit und Verfügbarkeit sind Reserveplätze für Gleichrichter in Form von Erweiterungs-Racks Gleichrichter (32) vorhanden. Über diese ist z.B. auch für die Erhöhung der Leistung aufgrund verlängerter Brenndauer der Operationsleuchten von 1 Stunde auf 3 Stunden und der Anschluss für einen separaten BSV-Erweiterungsverteiler (25) für den Vorortanschluss einer Erweiterungsbatterie (30) möglich. Das Gleichrichter AC/DC Modul besteht aus einem Basis Rack und modularen Einschüben, sowie mit zusätzlichem einpoligem Sicherheits-Rack Wechselrichter (33), wobei das Sicherheit-Rack Wechselrichter (33) bereits verdrahtet ist und damit die Anbindung an Spannung-, Strom und Kommunikationsleitungen zur Verfügung steht. In dem Einschubmodul befinden sich die komplette Elektronik und die Kommunikationsmodule. Ein Wechsel dieser Module ist werkzeuglos durch Laien durchführbar. Die Einstellung der Parameter erfolgt durch die interne Logikabarbeitung. Bei Ausfall eines elektronischen Bauteils während des Betriebes kann schnell ein gleichwertiges Bauteil eingesteckt und damit Abschaltungen und Operationsunterbrechung sowie eine Gefährdung des Patienten und der behandelnden Person vermieden werden.

In der Tür der BSV Anlage (24) ist ein Anzeigegerät eingebaut. Dieses informiert über den aktuellen Zustand der BSV Anlage. Im Normalbetrieb werden der Stromfluss, die Leistung und der Status angezeigt. Bei dem ersten Fehler wird der Status in Gelb und im Display eine Warnmeldung angezeigt. Bei Anlagenstörungen wird der Status in Rot und im Display wird eine Fehlermeldung angezeigt.

In Figur 4a ist eine vorteilhafte Weiterbildung der in Figur 4 als Blockschaltbild gezeigten sicheren Stromversorgung entsprechend der vorliegenden Erfindung dargestellt. Diese Weiterbildung weist zusätzlich im Wesentlichen die Überwachungseinrichtung 57 auf. Diese Überwachungseinrichtung 57 überwacht jegliche relevanten Bestandteile der Anlage, meldet im Fehlerfall und übernimmt Notfallmaßnahmen wie z.B. Umschaltungen auf Reservekomponenten.

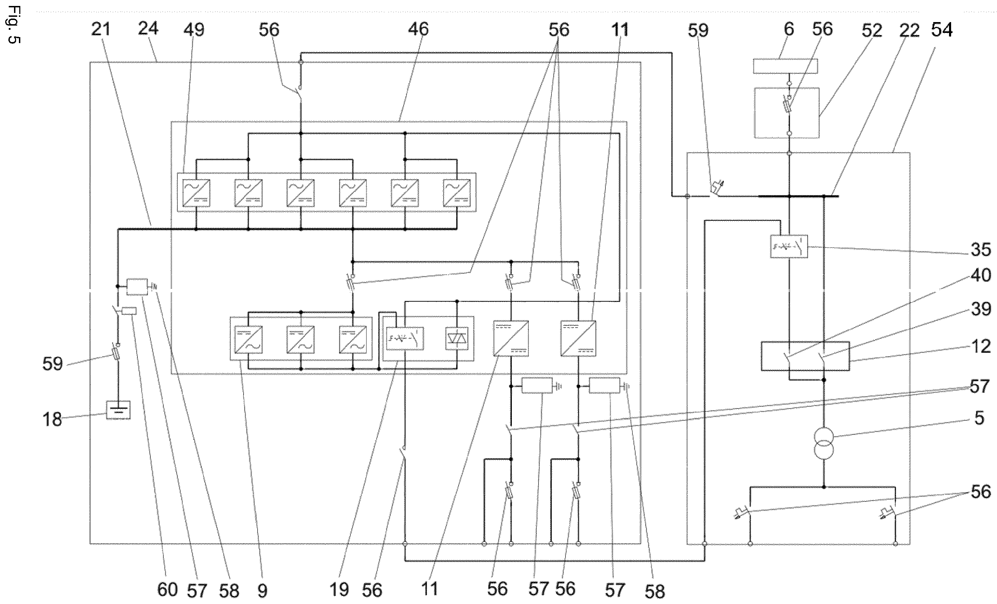

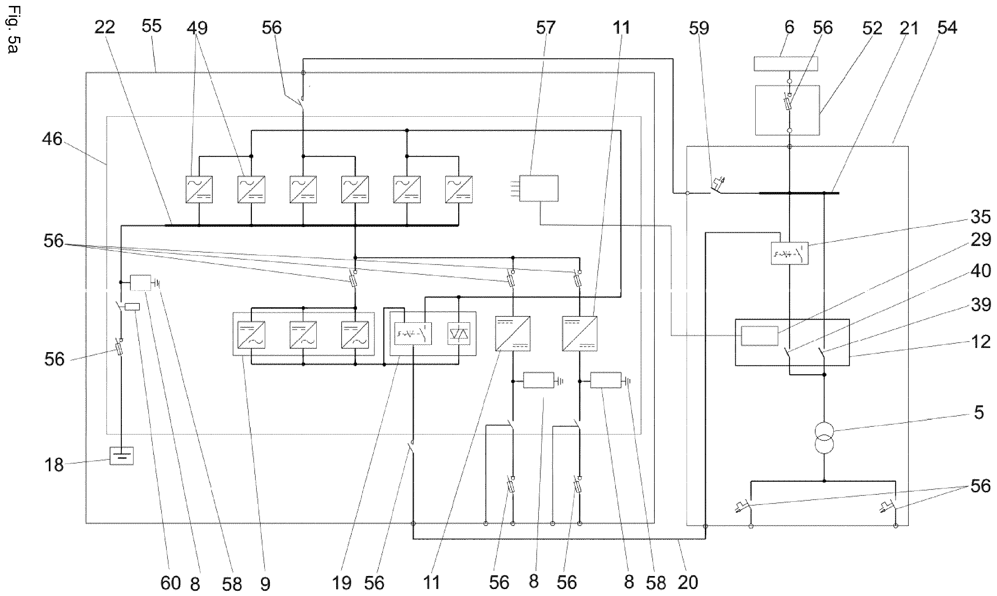

Figur 5 zeigt den schematischen Aufbau eines erfindungsgemäßen dreiphasigen batteriegestützten Stromversorgungssystems BSV 230 V AC / 24 V DC für Drehstromanschluss in dezentraler Ausführung mit Einzelschaltschränken für die batteriegestützte Stromversorgung BSV (1) 230 V AC und batteriegestützte Stromversorgung BSV (2) 24 V DC in der Grundausführung ohne Steckdosen und Operationsleuchten und ohne Erweiterungs-Racks und ohne Sicherheits-Racks mit den erforderlichen Sicherungselementen (59) und Überwachungseinrichtungen (57), wobei eine Reduktion oder Erhöhung von Einzelgeräten wie Gleichrichter, Wechselrichter und Sicherungs- und Schaltgeräten sowie von Überwachungseinrichtungen das Funktionsprinzip der zu schützenden Gesamtkonstruktion nicht beeinflusst.

In Figur 5 sind bspw. drei Schaltschränke bzw. Gehäuse abgebildet. Zum einen zeigt Figur 5 den Hausanschlusskasten (52). Dieser ist bauseits meistens vorhanden und mit seiner Einspeiseleitung mit Netzanschluss (6) verbunden und mit notwendigen Sicherungselementen (56) bestückt. Diese Einrichtung ist standardmäßig in jedem Gebäude vorhanden. Beispielhaft sind in der Figur 5 zwei Umrichter DC/DC (11) dargestellt. Hierfür sind Maßnahmen notwendig, so dass eine Störung eines Anlagenteils bspw. des Wechselrichters (9) keine Auswirkungen auf den anderen Anlagenteil bspw. Umrichter DC/DC (11) aufweist. Für diese Maßnahmen sind die Sicherungs- und Schaltelemente (56, 59) entsprechend der Anordnung in Figur 5 notwendig. Eine Erweiterung der Anlage um zusätzliche Umrichter DC/DC (11) oder Wechselrichter (9) bzw. eine Abweichung der Anordnung ist ebenso möglich. Diese Sicherungs- und Schaltelemente verhindern, dass beispielsweise durch einen Kurzschluss ein unzumutbarer Spannungseinbruch für die parallelgeschalteten Elemente über eine Dauer t ≥ 0,5 s stattfindet. Weiterhin bedingen die normativen Anforderungen, dass eine separate und händisch schaltbare manuelle Bypass-Umschaltung (35) in einem externen Gehäuse bestehen muss. Im Rahmen der Platzoptimierung wird dieser externe manuelle Bypass Umschalter (35), der zur vollständigen Freischaltung der BSV normativ gefordert ist, in der batteriegestützten Stromversorgung BSV (1) 230 V AC integriert, wodurch der zusätzliche Verteilerschrank entfallen kann. Weiterhin kann durch die Zuordnung einer batteriegestützten Stromversorgung BSV (2) 24 V DC zu einer batteriegestützten Stromversorgung BSV (1) 230 V AC unter Beherrschung der Kurzschluss- und Überlastverhältnisse im Abgangskabel des Wechselrichters auf die Abgangssicherung am Ausgang des Wechselrichters verzichtet werden, wenn die Kombination aus diesen beiden Verteilern aufgereiht aneinander platziert werden.

In Figur 5a ist eine vorteilhafte Weiterbildung der in Figur 5 als Blockschaltbild gezeigten sicheren Stromversorgung entsprechend der vorliegenden Erfindung dargestellt. Die wesentliche erfindungsgemäße Ergänzung betrifft hier den Erweiterungs-Rack Umrichter 62 und den Sicherheits-Rack Umrichter 63. Ebenso ist ein Umrichter als Einspeisung über eine weitere Gleichspannungsversorgung (64) dargestellt, z.B. eine Solaranlage (PV-Anlage).

### Bezugszeichenliste

- 1: batteriegestützte Stromversorgung BSV 230 V AC
- 2: batteriegestützte Stromversorgung BSV 24 V DC
- 3: Batteriegestütztes Stromversorgungssystem BSV 230 V AC / 24 V DC
- 4: elektronische Umschalteinrichtung EUE
- 5: Trenntransformator
- 6: Netzanschluss
- 7: IT-Netz
- 8: Isolationsüberwachung
- 9: Wechselrichter DC/AC
- 10: erster Gleichrichter AC/DC
- 11: Umrichter DC/DC
- 12: medizinische Netzumschaltung
- 13: erster elektronischer Umschalter
- 14: Operationsleuchten
- 15: Steckdosen
- 16: bevorzugte Einspeisung
- 17: Generator
- 18: Batterie
- 19: elektronischer Bypass
- 20: Bypass
- 21: Allgemeine Stromversorgung AV
- 22: Sicherheits-Stromversorgung SV
- 23: OP-Raum Anwendungsgruppe 2
- 24: BSV Grundverteiler
- 25: BSV Erweiterungsverteiler
- 26: Potenziometer
- 27: Ringkerntransformator
- 28: DC-Netz
- 29: Steuerung medizinische Netzumschaltung
- 30: Erweiterungsbatterie
- 31: Erweiterungs-Rack Wechselrichter
- 32: Erweiterungs-Rack Gleichrichter
- 33: Sicherheits-Rack Wechselrichter
- 34: Sicherheits-Rack Gleichrichter
- 35: manueller Bypass
- 36: erste Leitung
- 37: zweite Leitung
- 38: Spannungswächter
- 39: erster Lasttrennschalter
- 40: zweiter Lasttrennschalter
- 41: erste Batterie
- 42: zweite Batterie
- 43: zweiter Gleichrichter AC/DC
- 44: Batteriesystem für Wechselspannung AC
- 45: Batteriesystem für Gleichspannung DC
- 46: Batteriesystem
- 47: zweiter elektronischer Umschalter
- 48: Rack
- 49: Gleichrichter AC/DC
- 50: zweiter Gleichrichter
- 51: zweiter Umrichter DC/DC
- 52: Hausanschlusskasten
- 53: Einspeiseleitung
- 54: IT-Systemverteiler
- 55: BSV-Verteiler
- 56: Sicherungs- und Schaltelement
- 57: Überwachungseinrichtung
- 58: Erde
- 59: Sicherungselement
- 60: Tiefentladungsschutz
- 61: IT-Systemverteiler
- 62: Erweiterungs-Rack Umrichter
- 63: Sicherheits-Rack Umrichter
- 64: weitere Gleichspannungsversorgung

## Patentansprüche

1. Vorrichtung zur batteriegestützten Stromversorgung von Geräten mit Wechselspannung AC und Gleichspannung DC für medizinischen Einrichtungen, umfassend ein Batteriesystem (46), Steckdosen (15), Operationsleuchten (14), einen Trenntransformator (5), eine allgemeine Stromversorgung AV (21), einen elektronischen Bypass (19), einen manuellen Bypass (35), einen BSV Grundverteiler (24) und eine medizinische Netzumschaltung (12),
wobei
- das Batteriesystem (46) einen Gleichrichter AC/DC (49), eine Sicherheitsstromversorgung SV (22), einen Wechselrichter (9), Umrichter (11) und eine Batterie (18) aufweist, wobei der Gleichrichter AC/DC (49) mit einem Netzanschluss (6) verbunden ist und ausgangsseitig über die Sicherheitsstromversorgung SV (22) mit der Batterie (18) verbunden ist,
- die medizinische Netzumschaltung (12) einen ersten Lasttrennschalter (39) und einen zweiten Lasttrennschalter (40) aufweist,
- die Steckdosen (15) mit einer Wechselspannung AC versorgt werden, die über ein mittels Trenntransformator (5) gebildetes IT-Netz (7) bereitgestellt wird, wobei der Trenntransformator (5) über den zweiten Lasttrennschalter (40) der medizinischen Netzumschaltung (12) und den Wechselrichter (9) mit der Sicherheitsstromversorgung SV (22) verbunden ist,
- die Operationsleuchten (14) mit Gleichspannung DC versorgt werden, wobei die Gleichspannung DC durch die Umrichter (11) ausgangsseitig gebildet wird und die Umrichter (11) eingangsseitig mit der Sicherheitsstromversorgung SV (22) verbunden sind,
- die Sicherheitsstromversorgung SV (22) mit zumindest einer Erweiterungsbatterie (30) verbindbar ist,
wobei parallel zu dem Batteriesystem (46) der Netzanschluss (6) über die allgemeine Stromversorgung AV (21) mit dem ersten Lasttrennschalter (39) der medizinischen Netzumschaltung (12) und die Sicherheitsstromversorgung SV (22) über den Wechselrichter (9), den elektronischen Bypass (19) und den manuellen Bypass (35) mit dem zweitem Lasttrennschalter (40) der medizinischen Netzumschaltung (12) verbunden ist, wodurch die medizinische Netzumschaltung (12) mit dem Trenntransformator (5) verbunden ist und im BSV Grundverteiler (24) die Wechselspannung für die Steckdosen (15) im IT-Netz (7) erzeugbar ist.

2. Vorrichtung nach Anspruch 1, wobei zur Sicherung der Redundanz und Vermeidung von Betriebsstörungen der manuelle Bypass (35) zur vollständigen elektrischen Freischaltung des IT-Netzes (7) vom Batteriesystem (46) für Wartungszwecke im IT-Systemverteiler (54) angeordnet ist.

3. Vorrichtung nach Anspruch 1 oder 2, wobei zur Vermeidung von vollumfänglichen Betriebsstörungen alle Stromkreise mit einem separaten Sicherungs- und Schaltelement (56) ausgestattet sind, wodurch bei Störung, wie Kurzschluss in einem Stromkreis, nur dieser gestört ist und die anderen ungestört bleiben.

4. Vorrichtung nach einem der Ansprüche 1 bis 3, wobei zur Vermeidung von Betriebsstörungen alle Stromkreise mit Gleichspannung DC separater Isolationsüberwachung (8) und Überwachungseinrichtung (57) über Meldung dauerhaft überwachbar sind.

5. Vorrichtung nach einem der Ansprüche 1 bis 4, wobei zur Vermeidung von Betriebsstörungen durch falsche Bedienung der Schalteinrichtungen, wie der medizinischer Netzumschaltung (12), des manuellen Bypass (35), des elektronischen Bypass, alle laienbedienbaren Schalteinrichtungen durch mechanische und/oder elektronische Verrieglungen gegen fehlerhafte Bedienung gesichert sind.

6. Vorrichtung nach einem der Ansprüche 1 bis 5, wobei zur Vermeidung von Betriebsstörungen durch alterungsbedingte Abnutzung alle betriebswichtigen Anlagenbestandteile elektronische Umschalteinrichtung EUE (4), Wechselrichter (9), Gleichrichter (49), Batterie (18), Umrichter (11) durch integrierte Überwachungseinrichtungen und Meldung dauerhaft überwachbar sind.

7. Vorrichtung nach einem der Ansprüche 1 bis 6, wobei das Batteriesystem (46) Racks zum Bestücken mit Umrichtern (11) verschiedener Ausgangsspannungsebenen enthält und diese jeweils mit Erweiterungs-Racks Umrichter (62) und/oder Sicherheits-Racks Umrichter (63) verbunden sind, so dass dadurch bei Gerätestörung eine Redundanz n+1 besteht.

8. Vorrichtung nach einem der Ansprüche 1 bis 7, wobei die Gleichrichter AC/DC (49) und/oder die Wechselrichter DC/AC (9) und/oder die Umrichter DC/DC (11) als werkzeuglose Einschubeinrichtungen ausgeführt sind.

9. Vorrichtung nach Anspruch 8, wobei zumindest ein Umrichter (11) bi-direktional verwendbar ist und über diesen eine zusätzliche Gleichspannungsquelle anschließbar ist, welche im Falle einer Versorgung der Verbraucher (14) und der Steckdosen (15) über die Batterie eine ausreichende Ladung der Batterie (18) sicherstellt.

10. Verfahren zur batteriegestützten Stromversorgung von Geräten mit Wechselspannung AC und Gleichspannung DC für medizinische Einrichtungen mit einer Vorrichtung nach einem der Ansprüche 1 bis 9, umfassend die Schritte
a) bei ungestörtem Netzanschluss (6) Spannungsversorgung bevorzugt über Netzanschluss (6),
die für Steckdosen (15) mit Wechselspannung über Allgemeine Stromversorgung AV (21), ersten Lasttrennschalter (39) der medizinischen Netzumschaltung (12) und Trenntransformator (5) im IT-Netz erfolgt und / oder
die für Operationsleuchten (14) mit Gleichspannung über Gleichrichter (49), Batterie (18), Sicherheitsstromversorgung SV (22) und Umrichter DC/DC (11) erfolgt,
b) bei gestörtem Netzanschluss (6) Spannungsversorgung über Entladung der Batterie (18) und Sicherheitsstromversorgung SV (22),
die für Steckdosen (15) mit Wechselspannung über Wechselrichter DC/AC (9), zweiten Lasttrennschalter (40) der medizinischen Netzumschaltung (12) und Trenntransformator (5) im IT-Netz erfolgt, und / oder
die für Operationsleuchten (14) mit Gleichspannung über Umrichter DC/DC (11) zur Anpassung der Gleichspannung erfolgt.

11. Verfahren nach Anspruch 10, wobei Operationsleuchten (14) mit Gleichspannung bei ungestörtem und gestörtem Netzanschluss (6) über die Sicherheitsstromversorgung SV (22) und Umrichter (11) mit Strom bzw. Spannung versorgt werden.

12. Verfahren nach Anspruch 10 oder 11, wobei Steckdosen (15) mit Wechselspannung bei gestörtem Netzanschluss (6) über einen manuellen Bypass (35) und / oder einen elektronischen Bypass (19) über den zweiten Lasttrennschalter (40) der medizinischen Netzumschaltung (12) und Trenntransformator (5) versorgt werden.

13. Verfahren nach einem der Ansprüche 10 bis 12, wobei bei gestörtem Netzanschluss (6) über elektronischen Bypass (19) die Spannungsversorgung für Steckdosen über diesen automatisch von Netzanschluss (6) auf Batteriesystem (46) umschaltet.

14. Verfahren nach einem der Ansprüche 10 bis 13, wobei in zumindest einem vorverdrahteten Reserveplatz (32, 34, 31, 33) zusätzliche oder fehlerfreie Gleichrichter AC/DC (9) und / oder Wechselrichter (9) für Erweiterungen und Sicherheit bei Gerätestörung mittels werkzeuglosem Wechsel der Gleichrichter (49) und / oder der Wechselrichter (9) im laufenden Betrieb ohne Betriebsunterbrechung gesteckt werden.

15. Verfahren nach einem der Ansprüche 10 bis 14, das ferner eine Isolationsüberwachung für jeden Stromkreis und jede Steckdose (15) sowie die Operationsleuchten (14) vorsieht.

## Claims

1. Device for battery-supported power supply of devices with alternating current AC and direct current DC for medical facilities, comprising a battery system (46), sockets (15), operating lights (14), an isolating transformer (5), a general power supply (21), an electronic bypass (19), a manual bypass (35), a BSV main distribution board (24) and a medical mains switchover (12),
wherein
- the battery system (46) comprises an rectifier AC/DC (49), a safety power supply SV (22), an inverter (9), converter (11) and a battery (18), wherein the rectifier AC/DC (49) is connected to a mains connection (6) and is connected on the output side to the battery (18) via the safety power supply SV (22),
- the medical mains switchover (12) comprises a first load break switch (39) and a second load break switch (40),
- the sockets (15) are supplied with an AC voltage provided via an IT network (7) formed by means of an isolation transformer (5), wherein the isolation transformer (5) is connected to the safety power supply SV (22) via the second load break switch (40) of the medical mains switchover (12) and the inverter (9),
- the operating lights (14) are supplied with direct current DC, wherein the direct current DC is generated on the output side by the converters (11) and the converters (11) are connected on the input side to the safety power supply SV (22),
- the safety power supply SV (22) can be connected to at least one extension battery (30),
wherein, in parallel with the battery system (46), the mains connection (6) is connected via the general power supply AV (21) to the first load break switch (39) of the medical mains switchover (12) and the emergency power supply SV (22) is connected via the inverter (9), the electronic bypass (19) and the manual bypass (35) to the second load break switch (40) of the medical mains switchover (12), whereby the medical mains switchover (12) is connected to the isolating transformer (5) and the alternating voltage for the sockets (15) in the IT network (7) can be generated in the BSV main distribution board (24).

2. Device according to claim 1, wherein, in order to ensure redundancy and prevent operational disruptions, the manual bypass (35) for completely disconnecting the IT network (7) from the battery system (46) for maintenance purposes is located in the IT system distributor (54).

3. Device according to claim 1 or 2, wherein, in order to prevent complete operational disruptions, all circuits are equipped with a separate fuse and switching element (56), whereby in the event of a fault, such as a short circuit in one circuit, only this circuit is affected and the others remain unaffected.

4. Device according to one of claims 1 to 3, wherein, in order to avoid operational disruptions, all circuits with direct voltage DC can be permanently monitored by separate insulation monitoring (8) and monitoring device (57) via notification.

5. Device according to one of claims 1 to 4, wherein, in order to prevent malfunctions due to incorrect operation of the switching devices, such as the medical mains switchover (12), the manual bypass (35) and the electronic bypass, all switching devices that can be operated by laypersons are secured against incorrect operation by mechanical and/or electronic locks.

6. Device according to one of claims 1 to 5, wherein, in order to prevent operational malfunctions due to age-related wear, all operationally important system components, electronic switching device EUE (4), inverter (9), rectifier (49), battery (18), converter (11), can be permanently monitored by integrated monitoring devices and signalling.

7. Device according to one of claims 1 to 6, wherein the battery system (46) contains racks for equipping with converters (11) of different output voltage levels, and these are each connected to expansion racks converters (62) and/or safety racks converters (63), so that n+1 redundancy is provided in the event of a device malfunction.

8. Device according to one of claims 1 to 7, wherein the rectifiers AC/DC (49) and/or the inverters DC/AC (9) and/or the converters DC/DC (11) are designed as tool-free plug-in devices.

9. Device according to claim 8, wherein at least one converter (11) can be used bidirectionally and an additional direct voltage source can be connected via this converter, which ensures sufficient charging of the battery (18) in the event that the consumers (14) and the sockets (15) are supplied via the battery.

10. Method for battery-supported power supply of devices with alternating voltage AC and direct voltage DC for medical facilities with a device according to one of claims 1 to 9, comprising the steps
a) in the case of an undisturbed mains connection (6), power supply preferably via mains connection (6),
which for sockets (15) with alternating voltage is provided via the general power supply AV (21), the first load break switch (39) of the medical mains switchover (12) and the isolating transformer (5) in the IT network and/or
for operating lights (14) with direct voltage via rectifier (49), battery (18), safety power supply SV (22) and converter DC/DC (11),
b) in the event of a faulty mains connection (6), power supply via discharge of the battery (18) and emergency power supply SV (22),
which is provided for sockets (15) with alternating voltage via an inverter DC/AC (9), a second load break switch (40) of the medical mains switchover (12) and an isolating transformer (5) in the IT network, and/or
for operating lights (14) with direct current voltage via converter DC/DC (11) for adjusting the direct current voltage.

11. Method according to claim 10, wherein operating lights (14) with direct voltage are supplied with current or voltage via the safety power supply SV (22) and converter (11) in the event of an undisturbed and disturbed mains connection (6).

12. Method according to claim 10 or 11, wherein sockets (15) are supplied with alternating voltage in the event of a faulty mains connection (6) via a manual bypass (35) and/or an electronic bypass (19) via the second load break switch (40) of the medical mains switchover (12) and isolation transformer (5).

13. Method according to one of claims 10 to 12, wherein, in the event of a faulty mains connection (6), the power supply for sockets is automatically switched from the mains connection (6) to the battery system (46) via the electronic bypass (19).

14. Method according to one of claims 10 to 13, wherein at least one pre-wired reserve slot (32, 34, 31, 33), additional or fault-free rectifiers AC/DC (9) and/or inverters (9) can be plugged in for expansion and safety in the event of device malfunction by means of tool-free replacement of the rectifiers (49) and/or inverters (9) during operation without interruption.

15. Method according to one of claims 10 to 14, which further provides insulation monitoring for each circuit and each socket (15) as well as the operating lights (14).

## Revendications

1. Dispositif d'alimentation électrique sur batterie pour l'alimentation d'appareils en courant alternatif AC et en courant continu DC destinés à des établissements médicaux, comprenant un système de batteries (46), des prises de courant (15), des lampes opératoires (14), un transformateur d'isolement (5), une alimentation électrique générale AV (21), un bypass électronique (19), un bypass manuel (35), un tableau de distribution principal BSV (24) et un dispositif de commutation de réseau médical (12),
dans lequel
- le système de batteries (46) comprend un redresseur AC/DC (49), une alimentation de sécurité SV (22), un onduleur (9), des convertisseurs (11) et une batterie (18), le redresseur AC/DC (49) étant relié à une connexion au réseau (6) et étant relié côté sortie à la batterie (18) via l'alimentation de sécurité SV (22),
- le dispositif de commutation de réseau médical (12) comprenant un premier interrupteur-sectionneur de charge (39) et un second interrupteur-sectionneur de charge (40),
- les prises de courant (15) étant alimentées en courant alternatif AC fourni par un réseau **IT** (7) formé au moyen du transformateur d'isolement (5),
- le transformateur d'isolement (5) étant relié, via le second interrupteur-sectionneur de charge (40) du dispositif de commutation de réseau médical (12) et l'onduleur (9), à l'alimentation de sécurité SV (22),
- les lampes opératoires (14) étant alimentées en courant continu DC, le courant continu DC étant généré côté sortie par les convertisseurs (11), et les convertisseurs (11) étant reliés côté entrée à l'alimentation de sécurité SV (22),
- l'alimentation de sécurité SV (22) pouvant être reliée à au moins une batterie d'extension (30),
et dans lequel, en parallèle au système de batteries (46), la connexion au réseau (6) est reliée, via l'alimentation électrique générale AV (21), au premier interrupteur-sectionneur de charge (39) du dispositif de commutation de réseau médical (12), et l'alimentation de sécurité SV (22) est reliée, via l'onduleur (9), le bypass électronique (19) et le bypass manuel (35), au second interrupteur-sectionneur de charge (40) du dispositif de commutation de réseau médical (12), de sorte que le dispositif de commutation de réseau médical (12) est relié au transformateur d'isolement (5) et que, dans le tableau de distribution principal BSV (24), la tension alternative destinée aux prises de courant (15) dans le réseau IT (7) peut être générée.

2. Dispositif selon la revendication 1, dans lequel, afin de garantir la redondance et d'éviter des perturbations de fonctionnement, le bypass manuel (35) est disposé dans le tableau de distribution du système IT (54) pour une mise hors tension électrique complète du réseau IT (7) par rapport au système de batteries (46) à des fins de maintenance.

3. Dispositif selon la revendication 1 ou 2, dans lequel, afin d'éviter des perturbations de fonctionnement globales, tous les circuits électriques sont équipés d'un élément de protection et de commutation séparé (56), de sorte qu'en cas de défaut, tel qu'un court-circuit dans un circuit électrique, seul ce circuit est affecté, tandis que les autres restent opérationnels.

4. Dispositif selon l'une des revendications 1 à 3, dans lequel, afin d'éviter des perturbations de fonctionnement, tous les circuits électriques en courant continu DC sont surveillés en permanence par une surveillance d'isolement séparée (8) et un dispositif de surveillance (57) avec signalisation.

5. Dispositif selon l'une des revendications 1 à 4, dans lequel, afin d'éviter des perturbations de fonctionnement dues à une mauvaise manipulation des dispositifs de commutation, tels que le dispositif de commutation de réseau médical (12), le bypass manuel (35) et le bypass électronique, tous les dispositifs de commutation pouvant être actionnés par des personnes non qualifiées sont protégés contre une mauvaise manipulation au moyen de verrouillages mécaniques et/ou électroniques.

6. Dispositif selon l'une des revendications 1 à 5, dans lequel, afin d'éviter des perturbations de fonctionnement dues à l'usure liée au vieillissement, tous les composants essentiels au fonctionnement, à savoir le dispositif électronique de commutation EUE (4), l'onduleur (9), le redresseur (49), la batterie (18) et les convertisseurs (11), sont surveillés en permanence par des dispositifs de surveillance intégrés avec signalisation.

7. Dispositif selon l'une des revendications 1 à 6, dans lequel le système de batteries (46) comprend des racks destinés à recevoir des convertisseurs (11) de différents niveaux de tension de sortie, lesquels sont respectivement reliés à des racks d'extension de convertisseurs (62) et/ou à des racks de sécurité de convertisseurs (63), de sorte qu'une redondance n+1 est assurée en cas de défaillance d'un appareil.

8. Dispositif selon l'une des revendications 1 à 7, dans lequel les redresseurs AC/DC (49) et/ou les onduleurs DC/AC (9) et/ou les convertisseurs DC/DC (11) sont réalisés sous forme de modules enfichables sans outil.

9. Dispositif selon la revendication 8, dans lequel au moins un convertisseur (11) est utilisable de manière bidirectionnelle et permet le raccordement d'une source de courant continu supplémentaire, laquelle garantit, en cas d'alimentation des consommateurs (14) et des prises de courant (15) par la batterie, une charge suffisante de la batterie (18).

10. Procédé d'alimentation électrique sur batterie pour l'alimentation d'appareils en courant alternatif AC et en courant continu DC destinés à des établissements médicaux au moyen d'un dispositif selon l'une des revendications 1 à 9, comprenant les étapes suivantes :
a) en cas de connexion au réseau (6) non perturbée, alimentation électrique préférentielle via la connexion au réseau (6),
pour les prises de courant (15) en courant alternatif via l'alimentation électrique générale AV (21), le premier interrupteur-sectionneur de charge (39) du dispositif de commutation de réseau médical (12) et le transformateur d'isolement (5) dans le réseau IT, et/ou pour les lampes opératoires (14) en courant continu via le redresseur (49), la batterie (18), l'alimentation de sécurité SV (22) et les convertisseurs DC/DC (11),
b) en cas de connexion au réseau (6) perturbée, alimentation électrique par décharge de la batterie (18) et via l'alimentation de sécurité SV (22),
pour les prises de courant (15) en courant alternatif via l'onduleur DC/AC (9), le second interrupteur-sectionneur de charge (40) du dispositif de commutation de réseau médical (12) et le transformateur d'isolement (5) dans le réseau IT, et/ou pour les lampes opératoires (14) en courant continu via les convertisseurs DC/DC (11) pour l'adaptation de la tension continue.

11. Procédé selon la revendication 10, dans lequel les lampes opératoires (14) en courant continu sont alimentées en courant ou en tension, tant en cas de connexion au réseau (6) non perturbée qu'en cas de connexion au réseau (6) perturbée, via l'alimentation de sécurité SV (22) et les convertisseurs (11).

12. Procédé selon la revendication 10 ou 11, dans lequel les prises de courant (15) en courant alternatif sont alimentées, en cas de connexion au réseau (6) perturbée, via un bypass manuel (35) et/ou un bypass électronique (19), par l'intermédiaire du second interrupteur-sectionneur de charge (40) du dispositif de commutation de réseau médical (12) et du transformateur d'isolement (5).

13. Procédé selon l'une des revendications 10 à 12, dans lequel, en cas de connexion au réseau (6) perturbée, l'alimentation électrique des prises de courant est automatiquement commutée du réseau (6) vers le système de batteries (46) via le bypass électronique (19).

14. Procédé selon l'une des revendications 10 à 13, dans lequel, dans au moins un emplacement de réserve précâblé (32, 34, 31, 33), des redresseurs AC/DC (49) supplémentaires ou exempts de défaut et/ou des onduleurs (9) sont insérés, sans interruption de fonctionnement, pour des extensions et pour la sécurité en cas de défaillance d'un appareil, par échange sans outil des redresseurs (49) et/ou des onduleurs (9) en cours de fonctionnement.

15. Procédé selon l'une des revendications 10 à 14, comprenant en outre une surveillance d'isolement pour chaque circuit électrique et chaque prise de courant (15) ainsi que pour les lampes opératoires (14).
